# EUROPEAN PATENT SPECIFICATION

(11) **EP 2 532 936 B1**
(45) Date of publication and mention of the grant of the patent: **22.05.2019**
(21) Application number: 12181405.7
(22) Date of filing: 07.12.2010
(51) Int. Cl.: F16L 37/248

(54) **Swimming pool cleaners, with associated hoses and connectors**
Schwimmbadreiniger, mit dazugehörigen Schläuchen und Verbindern
Apparail de nettoyage pour piscine avec ses tuyaux et raccords

(30) Priority: 28.01.2010 US 695454
(43) Date of publication of application: 12.12.2012
(62) Divisional of application: 10795830.8
(73) Proprietor: Zodiac Pool Systems LLC, Vista, California 92081 (US)
(72) Inventor: Klimas, David, Andrew, Escondido, California 92027 (US)
(74) Representative: Ipside

(56) References cited:
- EP-A2- 1 936 253
- WO-A2-2006/026553
- CH-A- 482 143
- DE-A1- 1 937 176
- DE-A1-102007 004 335
- DE-C1- 19 808 980
- DE-U1-202009 008 207
- US-A- 1 836 986
- US-A1- 2008 202 594

## Description

This invention relates principally, but not necessarily exclusively, to swimming pool cleaners, and associated hoses and connectors used with swimming pool cleaners. Such hoses and connectors are e.g. known from documents EP1936253 and DE1937176.

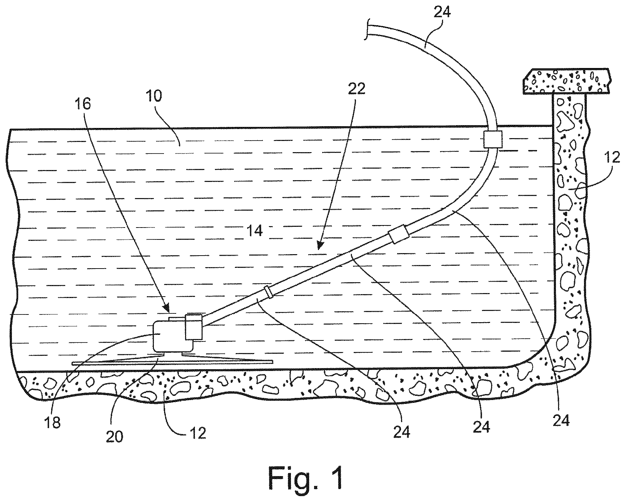

Swimming pool cleaners can include automatic and non-automatic types of pool cleaners, and also suction type and non-suction type pool cleaners. Figure 1 schematically shows an automatic, suction type pool cleaner 16. The pool cleaner 16 shown in Figure 1 includes a pool cleaner head 18, which has a suction pad 20 for interfacing with a substrate or a surface to be cleaned, such as the walls 12 of the pool 10. The pool cleaner 16 of Figure 1 also includes a hose assembly 22 for directing water from below the suction pad 20 to an inlet of the pool's circulation and filtration system or another destination.

Often, although not always, the hose assembly 22 is formed from several hose segments 24. In some uses, the hose assembly 22 is formed from several hose segments 24 so that the hose segments 24 can be kept straight during shipping, storing and at other times. In some uses, it is undesirable to coil hose assemblies used with pool cleaners, as it occasionally can cause the hose to retain a curved shape that could, in some uses, degrade performance of the pool cleaner.

The hose segments 24 may be connected together by inserting an end of one of the hose segments into an end of another hose segment. The ends of the hose segments may include "cuffs," such as "male hose cuffs" and "female hose cuffs," the male hose cuff fitting into the female hose cuff to connect the two hose segments. For known hoses used with pool cleaners, the closeness of the fit between the hose cuffs, particularly the outer diameter of the male hose cuff and the inner diameter of the female hose cuff, can effect the tightness of the connection between the two hose segments as well as whether and to what extent the connection between the two hose segments is fluid tight. If the hose cuffs are not manufactured to exacting tolerances, the hose segments will not always be capable of forming a strong or fluid tight connection, which, in some instances, may degrade the performance of the pool cleaner and otherwise make the pool cleaner more difficult to set up and use. For instance, in some, although not necessarily all, uses, portions of the hose assembly will float on the surface of the pool, and if a tight seal is not present between the hose segments, air can be introduced into the interior of the hose, which, in some uses, can degrade the performance of the pool's circulation system or other components.
The invention concerns a pool cleaner hose assembly according to claim 1.
The invention also concerns advantageous embodiments of such hose assembly according to claims 2, 3, 4, 5 or 6. The invention furthermore concerns a pool-cleaning system according to claim 7.

We have developed improved connectors for use with pool cleaner hoses and other components, such as the components on the pool cleaner head used to connect a hose to the cleaner head. The hose segments are releasably locked together in a manner that facilitates a fluid tight seal between the components. The hose segments are releasably locked together by inserting an end of one of the hose segments into an end of the other hose segment. The hose segments may be releasably locked together in two or more discrete positions, and adjusting the lock from one discrete position to another discrete position may cause the inserted hose segment to insert further into the other hose segment in which it is inserted, which, in some embodiments, may tighten the seal between the two hose segments.

One or both ends of the hose segment includes a sealing structure positioned in an interior area of the hose segment. The sealing structure may be positioned to contact an end of the other hose segment when the other hose segment is inserted into the interior area of the first hose segment. In some embodiments, such a sealing structure may supplement, partially replace or entirely replace the need for a tight fit between, for example, the outer diameter of a male hose cuff with the inner diameter of a female hose cuff, in order to form a fluid tight seal between the hose segments or other components.

Adjusting a locking mechanism of the hose segments from one discrete position to another discrete position may cause the inserted hose segment to insert further into the other hose segment such that the inserted hose segment will come into contact with, or further into contact with, the seal structure of the other hose segment or component, tightening the seal between the two hose segments.
Figure 1 schematically illustrates a pool and an automatic pool cleaner.
Figure 2 illustrates portions of two hose segments.
Figure 3 illustrates a cross-section of a female hose cuff of one of the hose segments shown in Figure 2.
Figure 4 illustrates a cross-section of a male hose cuff of one of the hose segments shown in Figure 2.
Figure 5 illustrates the male hose cuff of Figure 4 inserted into the female hose cuff of Figure 3.
Figures 6a - 6c illustrate the two hose segments of Figure 2 locked together in various positions.

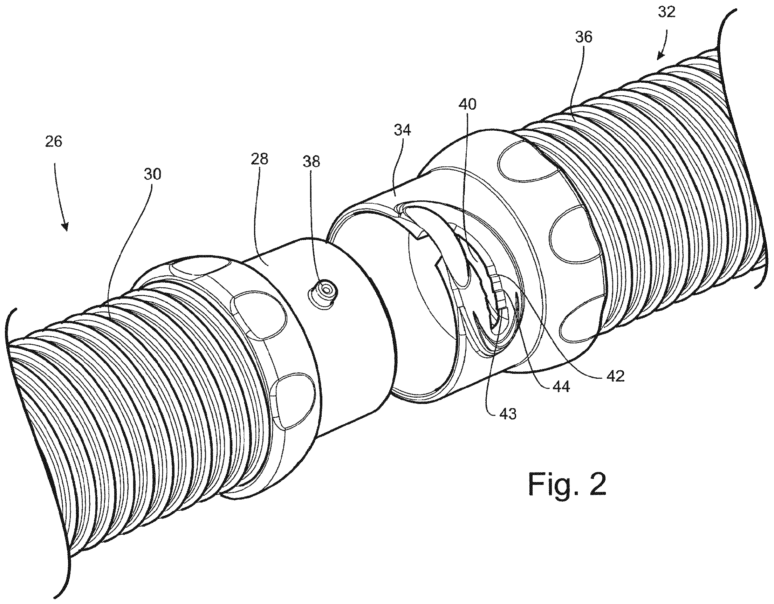

Figure 2 shows portions of a first pool cleaner hose segment 26 having a first end 28 associated with a hose body 30 and a second pool cleaner hose segment 32 having a second end 34 associated with a hose body 36. In the embodiment shown in Figure 2, the first end of the first hose segment 26 includes a male hose cuff 28 that fits inside a female hose cuff 34 of the second end of the second hose segment 32 to couple the two hose segments together, although, in other embodiments, other structures, devices or materials other than hose cuffs can be used to couple the two hose segments 26 and 32 together.

The male hose cuff 28 and female hose cuff 34 are generally cylindrical in shape and define passageways through which fluid can pass into the associated hose bodies 30 and 36. The outer diameter of the cylindrical male hose cuff 28 is at least slightly smaller than the inner diameter of the cylindrical female hose cuff 34, such that the male hose cuff 28 can fit into the female hose cuff 34 to connect the two hose segments 26 and 32 together. In other embodiments, the male and female hose cuffs 28 and 34 could have other geometries that allow the two hose segments to be connected together. In still other embodiments, male and female hose cuffs are not necessary, and other structures, including separable structures attached to the ends of the hose segments, structures formed integrally on the ends of the hose segments, or the ends of the hose segments themselves can be used to connect the hose segments.

The hose cuffs 28 and 34 shown in Figure 2 include locking features that facilitate locking hose segments 26 and 32 together. In the specific embodiment illustrated by Figure 2, the male hose cuff includes a post 38 that slides into a groove 40 formed in the female hose cuff to lock the hose segments together. As shown, the groove 40 curves or turns as it extends through the female hose cuff 34, such that twisting one hose segment with respect to the other moves the post 38 towards a distal end of the groove 40, locking the hose segments together. In other embodiments, the exact structure and function of the locking features is not important, and other arrangements can be utilized to lock the hose segments together. For instance, in some embodiments, the female hose cuff may include one or more posts having the same or different geometries of the post 38 shown in Figure 2 and the male hose cuff may include one or more grooves having the same or different geometries of the groove 40 shown in Figure 2. In still other embodiments, the hose segments may include other types of locking features, such as ratcheting mechanisms, screw threads, snap features, or other features that facilitate locking the two hose segments together.

In the embodiment shown in Figure 2, because the groove 40 is at least somewhat curved, and curves away from the end of the female hose cuff 34, the male hose cuff 28 will move further into the female hose cuff 34 as the hose cuffs 28 and 34 are twisted with respect to one another to move the post 38 towards the distal end of the groove 40. However, in other embodiments, other groove geometries could be employed to cause the male hose cuff 28 to move further into the female hose cuff 34 as they are twisted. For instance, without limitation, the female hose cuff could include a straight groove extending away from the end of the female hose cuff in a non-perpendicular, slanted angle that could interact with an appropriately sized and placed post on the male hose cuff to cause the male hose cuff to move further into the female hose cuff as they are twisted together.

The groove 40 shown in Figure 2 includes several pairs of restrictions 42, 44 and 46 that intermittently narrow the width of the groove 40. In some embodiments, the width of the groove 40 at the restrictions 42, 44 and 46 is at least somewhat narrower than the width of the post 38 on the male hose cuff 28, and, as such, the restrictions 42, 44 and 46 will at least somewhat limit the movement of the post 38 through the groove 40. In the embodiment illustrated by the Figures, although the restrictions 42, 44 and 46 at least somewhat limit the movement of the post 38 through the groove 40, application of a sufficient twisting force will allow the post 38 to move past a pair of restrictions. For instance, in some embodiments, the geometry and material of the restrictions in the groove, and / or the geometry and material of the post may cause those structures to be at least somewhat resilient in shape, such that application of a sufficient force will temporarily deform those structures, allowing the post to move past the restrictions. In some embodiments, the restrictions do not need to be formed in pairs, and a series of single restrictions along the length of the groove 40 will be sufficient to define narrower width portions of the groove.

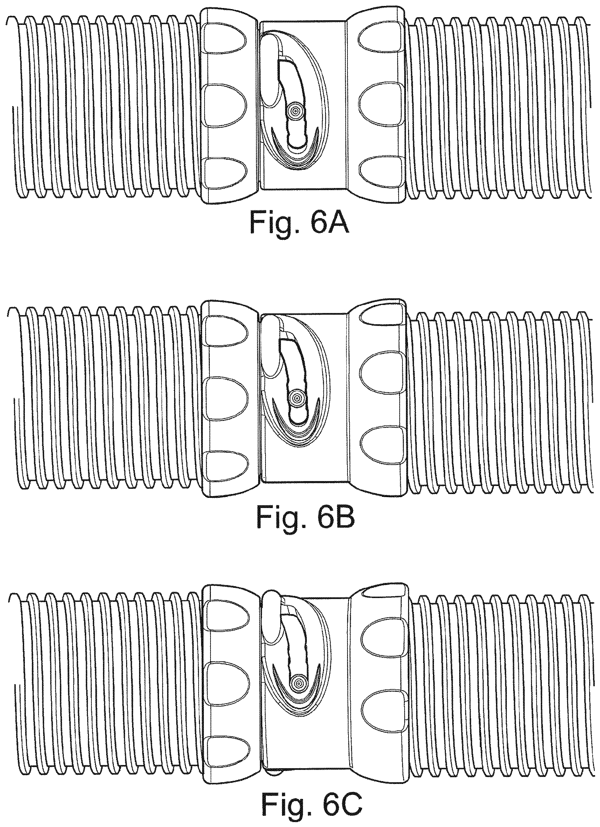

In the embodiment shown in the Figures, because there are multiple pairs of restrictions 42, 44 and 46 in the groove 40, there are several discrete locking positions in which the male and female hose cuffs 28 and 34 may be locked together. Accordingly, Figure 6a shows a first locked position (with the post positioned between the first and second pairs of restrictions 42 and 44), Figure 6b shows a second locked position (with the post 40 positioned between the second and third pairs of restrictions 44 and 46), and Figure 6c shows a third locked position (with the post 40 positioned past the third pair of restrictions 46 at the distal end of the groove 40). As described above, moving the post 38 towards the distal end of the groove 40 (e.g. moving from the first locked position, to the second and / or third locked positions) will cause the male hose cuff 28 to move further into the female hose cuff 34.

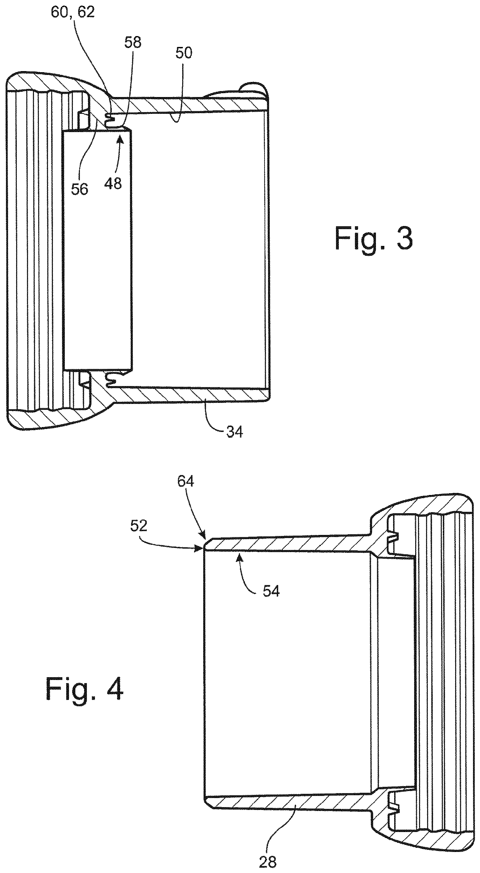

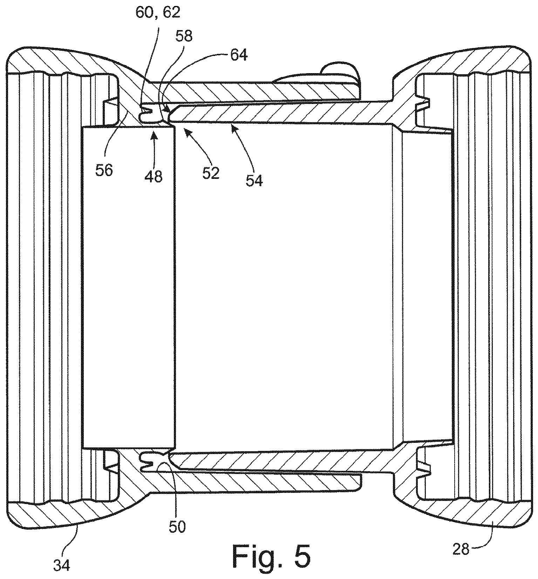

Figures 3 - 5 show cross sections of the female hose cuff 34 (Figure 3), the male hose cuff 28 (Figure 4), and the male hose cuff 28 inserted into the female hose cuff 34 (Figure 5). In some embodiments, the cuffs are made by injection molding, although other manufacturing processes could also be used. The cuffs may be made from rigid plastic, flexible plastic, a combination of rigid and flexible plastics, or from other materials. In some embodiments, some portions of the cuff could be made from rigid plastic and other portions of the cuff could be over-molded with a less rigid plastic.

As shown in Figure 3, the female hose cuff 34 includes a seal 48 positioned in an interior area of the female hose cuff 34. In some embodiments, the seal 48 is positioned in the interior of the female hose cuff 34 such that when the male hose cuff 28 is inserted into the female hose cuff 34, the seal 48 will interact with the distal end 52 of the male hose cuff 28 to form a relatively fluid tight connection. In some embodiments, the seal 48 is in addition to, or instead of, any sealing effect provided by the interaction between the outer surface of the male hose cuff 28 and the inner surface of the female hose cuff 34. In some embodiments, the seal 48 could be associated with the male hose cuff 28 rather than the female hose cuff 34.

In the particular embodiment shown in Figures 3 - 5, the seal 48 is positioned in the interior area of the female hose cuff 34 to define a space between itself and the interior surface 50 of the female hose cuff 34, such that the seal 48 is positioned to contact a distal end 52 of the male hose cuff 28, as shown in Figure 5. As shown in Figure 5, the seal 48 is positioned such that at least a portion of the distal end 52 of the male hose cuff 28 can fit in the space between the interior surface 50 of the female hose cuff 34 and the seal 48, such that the seal 48 contacts an interior surface 54 of the male hose cuff 34. In other embodiments, the seal is positioned to contact other portions of the male hose cuff 28.

In some embodiments, the seal 48 may be at least somewhat resilient, such that it will flex slightly as the distal end 52 of the male hose cuff 28 enters the space between the seal 48 and the interior surface 50 of the female hose cuff 34, yet will tend to remain in contact with the interior surface 54 of the male hose cuff 34. In the particular embodiment shown in Figures 3 and 5, the seal 50 includes a rib 58, which may further facilitate maintaining contact between the seal 50 and the distal end 52 of the male hose cuff 28.

In the particular embodiment shown in Figures 3 - 5, the seal 48 is supported in the interior area of the female hose cuff 34 by a flange 56 extending from the interior surface 50 of the female hose cuff 34. In other embodiments, however, the seal 48 may be directly connected to the interior surface 50 of the female hose cuff 34 or could be positioned in the interior area of the female hose cuff in other manners.

The flange 56 shown in Figures 3 and 5 also includes a wedge 60 extending outwardly from it into the space between the seal 48 and the interior surface 50 of the female hose cuff 34. The wedge 60 includes a ramped surface 62, which, in the particular embodiment shown in Figures 3 - 5, is positioned to interact with a chamfered surface 64 on the male hose cuff 28, such that as the distal end 52 of the male hose cuff 28 enters or moves further into the space between the seal 48 and the interior surface 50 of the female hose cuff 34, the interior surface 54 of the male hose cuff 28 will be forced into contact with, or more tightly in contact with, the seal 48. For instance, in the embodiment shown in Figures 6a - 6c, as the hose segments are connected and adjusted through the discrete locking positions defined by the first, second and third restrictions 42, 44 and 46, the distal end 52 of the male hose cuff 28 may be forced into contact with, or more tightly in contact with the seal 48 by the interaction of the ramped surface 62 and the chamfered surface 64, which may tighten the seal between the two hose segments.

Some of the above described embodiments may be advantageous in that hose segments or other pool cleaner components may not require exacting manufacturing tolerances to obtain a tight seal in all situations. The examples provided above are only a few particular embodiments of the invention, with a few alternatives noted.

## Claims

1. A pool cleaner hose assembly for use in a pool, the assembly comprising:
a. a first pool cleaner hose segment (26), the first pool cleaner hose segment having a first end in the form of a male hose cuff (28);
b. a second pool cleaner hose segment (32), the second hose segment having a second end in the form of a female hose cuff (34) into which the male hose cuff fits to connect the two hose segments;
c. wherein a portion of the first end of the first pool cleaner hose segment is inserted inside of a portion of the second end of the second pool cleaner hose segment; and
d. the hose cuffs (28, 34) include locking features that facilitate releasable locking of the first and second pool cleaner hose segments together when the portion of the first end of the first pool cleaner hose segment is inserted inside of the portion of the second end of the second pool cleaner hose segment, the locking features further comprising a first locked position and a second locked position,
e. wherein moving the locking features (38, 40) from the first locked position to the second locked position causes the portion of the first end of the first pool cleaner hose segment to insert further inside of the portion of the second end of the second pool cleaner hose segment, **characterised in that**
f. moving the locking features (38, 40) from the first locked position to the second locked position causes the portion of the first end of the first pool cleaner hose segment to move into or further into a space between an interior surface (50) of the second end (34) of the second pool cleaner hose segment (32) and a seal (48) associated with the second end of the second pool cleaner hose segment,
g. wherein moving the locking features (38, 40) from the first locked position to the second locked position causes a chamfered surface (64) on the first end (28) of the first pool cleaner hose segment (26) to contact or further contact a ramped surface (62) associated with the second end (34) of the second pool cleaner hose segment (32), the ramped surface positioned between the interior surface (50) of the second end of the second pool cleaner hose segment and the seal (48).

2. The pool cleaner hose assembly of claim 1, wherein the seal (48) contacts an interior surface (54) of the first end (28) of the first pool cleaner hose segment (26).

3. The pool cleaner hose assembly of claim 1, wherein the locking features (38, 40) comprises a post (38) extending from one of the first end (28) of the first pool cleaner hose segment (26) or the second end (34) of the second pool cleaner hose segment (32) and a groove (40) extending at least partially through the other of the first end of the first pool cleaner hose segment or the second end of the second pool cleaner hose segment.

4. The pool cleaner hose assembly of claim 3, wherein the groove (40) extending at least partially through the other of the first end of the first pool cleaner hose segment or the second end of the second pool cleaner hose segment is at least slightly curved.

5. The pool cleaner hose assembly of claim 4, wherein the groove (40) includes a first portion of reduced width (42, 44) and a second portion of reduced width (44, 46).

6. The pool cleaner hose assembly of claim 5, wherein in the first locked position, the post (38) is positioned in the groove (40) between the first portion of reduced width (42, 44) and the second portion of reduced with (44, 46); and wherein in the second locked position, the post is positioned in the groove between the second portion of reduced width and a distal end of the groove.

7. A pool-cleaning system comprising:
a. an automatic pool cleaner (16); and
b. a first suction-hose segment (24);
c. wherein the automatic pool cleaner is connected to the first suction-hose segment by a first connector and a second connector:
i. the first connector having a first end in the form of a male cuff (28);
ii. the second connector having a second end in the form of a female cuff (34) into which the male hose cuff fits;
iii. wherein a portion of the first end is inserted inside of a portion of the second end; and
iv. wherein the cuffs include locking features (38, 40) releasably locking the first and second connectors together when the portion of the first end of the first connector is inserted inside of the portion of the second end of the second connector, the locking features further comprising a first locked position and a second locked position.
v. wherein moving the locking features (38, 40) from the first locked position to the second locked position causes the portion of the first end of the first pool cleaner hose segment to insert further inside of the portion of the second end of the second pool cleaner hose segment, **characterised in that**
vi. moving the locking features (38, 40) from the first locked position to the second locked position causes the portion of the first end of the first pool cleaner hose segment to move into or further into a space between an interior surface (50) of the second end (34) of the second pool cleaner hose segment (32) and a seal (48) associated with the second end of the second pool cleaner hose segment,
vii. moving the locking features (38, 40) from the first locked position to the second locked position causes a chamfered surface (64) on the first end (28) of the first pool cleaner hose segment (26) to contact or further contact a ramped surface (62) associated with the second end (34) of the second pool cleaner hose segment (32), the ramped surface positioned between the interior surface (50) of the second end of the second pool cleaner hose segment and the seal (48).

## Patentansprüche

1. Poolreiniger-Schlauchbaugruppe zur Verwendung in einem Pool, wobei die Baugruppe umfasst:
a. ein erstes Poolreiniger-Schlauchsegment (26), wobei das erste Poolreiniger-Schlauchsegment ein erstes Ende in der Form einer männlichen Schlauchmanschette (28) aufweist;
b. ein zweites Poolreiniger-Schlauchsegment (32), wobei das zweite Schlauchsegment ein zweites Ende in der Form einer weiblichen Schlauchmanschette (34) aufweist, in die die männliche Schlauchmanschette hineinpasst, um die zwei Schlauchsegmente zu verbinden;
c. wobei ein Abschnitt des ersten Endes des ersten Poolreiniger-Schlauchsegments in einen Abschnitt des zweiten Endes des zweiten Poolreiniger-Schlauchsegments eingeschoben wird; und
d. die Schlauchmanschetten (28, 34) Verriegelungsmittel einschließen, die lösbares Verriegeln des ersten und zweiten Poolreiniger-Schlauchsegments miteinander erleichtern, wenn der Abschnitt des ersten Endes des ersten Poolreiniger-Schlauchsegments in den Abschnitt des zweiten Endes des zweiten Poolreiniger-Schlauchsegments eingeschoben wird, wobei die Verriegelungsmittel weiter eine erste verriegelte Stellung und eine zweite verriegelte Stellung umfassen,
e. wobei Bewegen der Verriegelungsmittel (38, 40) von der ersten verriegelten Stellung zur zweiten verriegelten Stellung den Abschnitt des ersten Endes des ersten Poolreiniger-Schlauchsegments dazu bringt, sich weiter in den Abschnitt des zweiten Endes des zweiten Poolreiniger-Schlauchsegments einzuschieben, **dadurch gekennzeichnet, dass**
f. Bewegen der Verriegelungsmittel (38, 40) von der ersten verriegelten Stellung zur zweiten verriegelten Stellung den Abschnitt des ersten Endes des ersten Poolreiniger-Schlauchsegments dazu bringt, sich in oder weiter in einen Raum zwischen einer Innenfläche (50) des zweiten Endes (34) des zweiten Poolreiniger-Schlauchsegments (32) und einer Dichtung (48) zu bewegen, die mit dem zweiten Ende des zweiten Poolreiniger-Schlauchsegments assoziiert ist,
g. wobei Bewegen der Verriegelungsmittel (38, 40) von der ersten verriegelten Stellung zur zweiten verriegelten Stellung eine abgeschrägte Fläche (64) am ersten Ende (28) des ersten Poolreiniger-Schlauchsegments (26) dazu bringt, eine ansteigende Fläche (62), die mit dem zweiten Ende (34) des zweiten Poolreiniger-Schlauchsegments (32) assoziiert ist, zu berühren oder weiter zu berühren, wobei die ansteigende Fläche zwischen der Innenfläche (50) des zweiten Endes des zweiten Poolreiniger-Schlauchsegments und der Dichtung (48) positioniert ist.

2. Polreiniger-Schlauchbaugruppe nach Anspruch 1, wobei die Dichtung (48) eine Innenfläche (54) des ersten Endes (28) des ersten Poolreiniger-Schlauchsegments (26) berührt.

3. Poolreiniger-Schlauchbaugruppe nach Anspruch 1, wobei die Verriegelungsmittel (38, 40) einen Stift (38) umfassen, der sich von einem aus dem ersten Ende (28) des ersten Poolreiniger-Schlauchsegments (26) oder dem zweiten Ende (34) des zweiten Poolreiniger-Schlauchsegments (32) erstreckt, und eine Nut (40), die sich mindestens teilweise durch das andere aus dem ersten Ende des ersten Poolreiniger-Schlauchsegments oder dem zweiten Ende des zweiten Poolreiniger-Schlauchsegments erstreckt.

4. Poolreiniger-Schlauchbaugruppe nach Anspruch 3, wobei die Nut (40), die sich mindestens teilweise durch das andere aus dem ersten Ende des ersten Poolreiniger-Schlauchsegments oder dem zweiten Ende des zweiten Poolreiniger-Schlauchsegments erstreckt, mindestens leicht gekrümmt ist.

5. Poolreiniger-Schlauchbaugruppe nach Anspruch 4, wobei die Nut (40) einen ersten Abschnitt von verringerter Breite (42, 44) und einen zweiten Abschnitt von verringerter Breite (44, 46) einschließt.

6. Poolreiniger-Schlauchbaugruppe nach Anspruch 5, wobei in der ersten verriegelten Stellung der Stift (38) in der Nut (40) zwischen dem ersten Abschnitt von verringerter Breite (42, 44) und dem zweiten Abschnitt von verringerter Breite (44, 46) positioniert ist; und wobei in der zweiten verriegelten Stellung der Stift in der Nut zwischen dem zweiten Abschnitt von verringerter Breite und einem distalen Ende der Nut positioniert ist.

7. Poolreinigungssystem, umfassend:
a. einen automatischen Poolreiniger (16); und
b. ein erstes Saugschlauchsegment (24);
c. wobei der automatische Poolreiniger über einen ersten Verbinder und einen zweiten Verbinder mit dem ersten Saugschlauchsegment verbunden ist:
i. wobei der erste Verbinder ein erstes Ende in der Form einer männlichen Manschette (28) aufweist;
ii. wobei der zweite Verbinder ein zweites Ende in der Form einer weiblichen Manschette (34) aufweist, in die die männliche Schlauchmanschette hineinpasst;
iii. wobei ein Abschnitt des ersten Endes in einen Abschnitt des zweiten Endes eingeschoben wird; und
iv. wobei die Manschetten Verriegelungsmittel (38, 40) einschließen, die den ersten und zweiten Verbinder lösbar miteinander verriegeln, wenn der Abschnitt des ersten Endes des ersten Verbinders in den Abschnitt des zweiten Endes des zweiten Verbinders eingeschoben wird, wobei die Verriegelungsmittel weiter eine erste verriegelte Stellung und eine zweite verriegelte Stellung umfassen;
v. wobei Bewegen der Verriegelungsmittel (38, 40) von der ersten verriegelten Stellung zur zweiten verriegelten Stellung den Abschnitt des ersten Endes des ersten Poolreiniger-Schlauchsegments dazu bringt, sich weiter in den Abschnitt des zweiten Endes des zweiten Poolreiniger-Schlauchsegments einzuschieben, **dadurch gekennzeichnet, dass**
vi. Bewegen der Verriegelungsmittel (38, 40) von der ersten verriegelten Stellung zur zweiten verriegelten Stellung den Abschnitt des ersten Endes des ersten Poolreiniger-Schlauchsegments dazu bringt, sich in oder weiter in einen Raum zwischen einer Innenfläche (50) des zweiten Endes (34) des zweiten Poolreiniger-Schlauchsegments (32) und einer Dichtung (48), die mit dem zweiten Ende des zweiten Poolreiniger-Schlauchsegments assoziiert ist, zu bewegen,
vii. Bewegen der Verriegelungsmittel (38, 40) von der ersten verriegelten Stellung zur zweiten verriegelten Stellung eine abgeschrägte Fläche (64) am ersten Ende (28) des ersten Poolreiniger-Schlauchsegments (26) dazu bringt, eine ansteigende Fläche (62), die mit dem zweiten Ende (34) des zweiten Poolreiniger-Schlauchsegments (32) assoziiert ist, zu berühren oder weiter zu berühren, wobei die ansteigende Fläche zwischen der Innenfläche (50) des zweiten Endes des zweiten Poolreiniger-Schlauchsegments und der Dichtung (48) positioniert ist.

## Revendications

1. Ensemble tuyau flexible de dispositif de nettoyage de piscine destiné à être utilisé dans une piscine, l'ensemble comprenant :
a. un premier segment de tuyau flexible de dispositif de nettoyage de piscine (26), le premier segment de tuyau flexible de dispositif de nettoyage de piscine ayant une première extrémité sous forme d'un manchon de tuyau flexible mâle (28) ;
b. un second segment de tuyau flexible de dispositif de nettoyage de piscine (32), le second segment de tuyau flexible ayant une seconde extrémité sous forme d'un manchon de tuyau flexible femelle (34) dans lequel le manchon de tuyau flexible mâle s'ajuste pour raccorder les deux segments de tuyau flexible ;
c. dans lequel une portion de la première extrémité du premier segment de tuyau flexible de dispositif de nettoyage de piscine est insérée à l'intérieur d'une portion de la seconde extrémité du second segment de tuyau flexible de dispositif de nettoyage de piscine ; et
d. les manchons de tuyau flexible (28, 34) comportent des éléments de blocage qui facilitent un blocage conjoint de façon libérable des premier et second segments de tuyau flexible de dispositif de nettoyage de piscine lorsque la portion de la première extrémité du premier segment de tuyau flexible de dispositif de nettoyage de piscine est insérée à l'intérieur de la portion de la seconde extrémité du second segment de tuyau flexible de dispositif de nettoyage de piscine, les éléments de blocage comprenant en outre une première position bloquée et une seconde position bloquée,
e. dans lequel le déplacement des éléments de blocage (38, 40) de la première position bloquée à la seconde position bloquée amène la portion de la première extrémité du premier segment de tuyau flexible de dispositif de nettoyage de piscine à s'insérer davantage à l'intérieur de la portion de la seconde extrémité du second segment de tuyau flexible de dispositif de nettoyage de piscine, **caractérisé en ce que**
f. le déplacement des éléments de blocage (38, 40) de la première position bloquée à la seconde position bloquée amène la portion de la première extrémité du premier segment de tuyau flexible de dispositif de nettoyage de piscine à se déplacer dans ou davantage dans un espace entre une surface intérieure (50) de la seconde extrémité (34) du second segment de tuyau flexible de dispositif de nettoyage de piscine (32) et un joint d'étanchéité (48) associé à la seconde extrémité du second segment de tuyau flexible de dispositif de nettoyage de piscine,
g. dans lequel le déplacement des éléments de blocage (38, 40) de la première position bloquée à la seconde position bloquée amène une surface chanfreinée (64) sur la première extrémité (28) du premier segment de tuyau flexible de dispositif de nettoyage de piscine (26) à venir en contact ou venir davantage en contact avec une surface inclinée (62) associée à la seconde extrémité (34) du second segment de tuyau flexible de dispositif de nettoyage de piscine (32), la surface inclinée étant positionnée entre la surface intérieure (50) de la seconde extrémité du second segment de tuyau flexible de dispositif de nettoyage de piscine et le joint d'étanchéité (48).

2. Ensemble tuyau flexible de dispositif de nettoyage de piscine selon la revendication 1, dans lequel le joint d'étanchéité (48) vient en contact avec une surface intérieure (54) de la première extrémité (28) du premier segment de tuyau flexible de dispositif de nettoyage de piscine (26).

3. Ensemble tuyau flexible de dispositif de nettoyage de piscine selon la revendication 1, dans lequel les éléments de blocage (38, 40) comprennent un montant (38) s'étendant depuis l'une de la première extrémité (28) du premier segment de tuyau flexible de dispositif de nettoyage de piscine (26) ou de la seconde extrémité (34) du second segment de tuyau flexible de dispositif de nettoyage de piscine (32) et une rainure (40) s'étendant au moins partiellement à travers l'autre de la première extrémité du premier segment de tuyau flexible de dispositif de nettoyage de piscine ou de la seconde extrémité du second segment de tuyau flexible de dispositif de nettoyage de piscine.

4. Ensemble tuyau flexible de dispositif nettoyage de piscine selon la revendication 3, dans lequel la rainure (40) s'étendant au moins partiellement à travers l'autre de la première extrémité du premier segment de tuyau flexible de dispositif de nettoyage de piscine ou de la seconde extrémité du second segment de tuyau flexible de dispositif de nettoyage de piscine est au moins légèrement incurvée.

5. Ensemble tuyau flexible de dispositif de nettoyage de piscine selon la revendication 4, dans lequel la rainure (40) comporte une première portion de largeur réduite (42, 44) et une seconde portion de largeur réduite (44, 46).

6. Ensemble tuyau flexible de dispositif de nettoyage de piscine selon la revendication 5, dans lequel, dans la première position bloquée, le montant (38) est positionné dans la rainure (40) entre la première portion de largeur réduite (42, 44) et la seconde portion de largeur réduite (44, 46) ; et dans lequel, dans la seconde position bloquée, le montant est positionné dans la rainure entre la seconde portion de largeur réduite et une extrémité distale de la rainure.

7. Système de nettoyage de piscine comprenant :
a. un dispositif automatique de nettoyage de piscine (16) ; et
b. un premier segment de tuyau flexible d'aspiration (24) ;
c. dans lequel le dispositif automatique de nettoyage de piscine est raccordé au premier segment de tuyau flexible d'aspiration par un premier raccord et un second raccord ;
i. le premier raccord ayant une première extrémité sous forme d'un manchon mâle (28) ;
ii. le second raccord ayant une seconde extrémité sous forme d'un manchon femelle (34) dans lequel le manchon de tuyau flexible mâle s'ajuste ;
iii. dans lequel une portion de la première extrémité est insérée à l'intérieur d'une portion de la seconde extrémité ; et
iv. dans lequel les manchons comportent des éléments de blocage (38, 40) bloquant conjointement de façon libérable les premier et second raccords lorsque la portion de la première extrémité du premier raccord est insérée à l'intérieur de la portion de la seconde extrémité du second raccord, les éléments de blocage comprenant en outre une première position bloquée et une seconde position bloquée ;
v. dans lequel le déplacement des éléments de blocage (38, 40) de la première position bloquée à la seconde position bloquée amène la portion de la première extrémité du premier segment de tuyau flexible de dispositif de nettoyage de piscine à s'insérer davantage à l'intérieur de la portion de la seconde extrémité du second segment de tuyau flexible de dispositif de nettoyage de piscine, **caractérisé en ce que**
vi. le déplacement des éléments de blocage (38, 40) de la première position bloquée à la seconde position bloquée amène la portion de la première extrémité du premier segment de tuyau flexible de dispositif de nettoyage de piscine à se déplacer dans ou davantage dans un espace entre une surface intérieure (50) de la seconde extrémité (34) du second segment de tuyau flexible de dispositif de nettoyage de piscine (32) et un joint d'étanchéité (48) associé à la seconde extrémité du second segment de tuyau flexible de dispositif de nettoyage de piscine,
vii. le déplacement des éléments de blocage (38, 40) de la première position bloquée à la seconde position bloquée amène une surface chanfreinée (64) sur la première extrémité (28) du premier segment de tuyau flexible de dispositif de nettoyage de piscine (26) à venir en contact ou venir davantage en contact avec une surface inclinée (62) associée à la seconde extrémité (34) du second segment de tuyau flexible de dispositif de nettoyage de piscine (32), la surface inclinée étant positionnée entre la surface intérieure (50) de la seconde extrémité du second segment de tuyau flexible de dispositif de nettoyage de piscine et le joint d'étanchéité (48).
